(19) **Europäisches Patentamt / European Patent Office / Office européen des brevets**

(11) **EP 1 242 568 B1**

(12) ## FASCICULE DE BREVET EUROPEEN

(45) Date de publication et mention de la délivrance du brevet:
**19.01.2011 Bulletin 2011/03**

(21) Numéro de dépôt: **00981468.2**

(22) Date de dépôt: **28.11.2000**

(51) Int Cl.:
***C10G 35/12*** *(2006.01)*

(86) Numéro de dépôt international:
**PCT/FR2000/003317**

(87) Numéro de publication internationale:
**WO 2001/040408 (07.06.2001 Gazette 2001/23)**

(54) **PROCEDE ET INSTALLATION POUR LA PRODUCTION D'AROMATIQUES EN LIT MOBILE INCLUANT UNE REDUCTION DU CATALYSEUR**

VERFAHREN UND ANLAGE ZUR HERSTELLUNG VON AROMATEN IN WANDERBETT MIT KATALYSATOR REDUKTION

METHOD AND INSTALLATION FOR PRODUCING AROMATIC COMPOUNDS IN MOBILE BED COMPRISING CATALYST REDUCTION

(84) Etats contractants désignés:
**BE DE ES FR IT NL**

(30) Priorité: **30.11.1999 FR 9915227**

(43) Date de publication de la demande:
**25.09.2002 Bulletin 2002/39**

(73) Titulaire: **Institut Français du Pétrole 92852 Rueil-Malmaison Cedex (FR)**

(72) Inventeurs:
• **BRUNET, François-Xavier F-13800 Istres (FR)**

• **CLAUSE, Olivier F-78400 Chatou (FR)**
• **DEVES, Jean-Marie F-78540 Vernouillet (FR)**
• **SANCHEZ, Eric F-92500 Rueil Malmaison (FR)**
• **HOFFMANN, Frédéric F-75010 Paris (FR)**

(56) Documents cités:
**FR-A- 2 657 087**

**Description**

L'invention concerne les procédés en lit mobile pour la production à partir d'hydrocarbures de composés aromatiques, dans lesquels on transforme une charge d'hydrocarbures additionnée d'un gaz riche en hydrogène. Elle s'applique plus spécifiquement au reformage régénératif ou à la production plus spécifique de BTX (butène, toluène, xylènes) avec régénération continue du catalyseur.

Elle concerne plus particulièrement l'étape dans laquelle se déroulent majoritairement les réactions de déshydrogénation des naphtènes contenus dans la charge, c'est à dire celle réalisée dans le premier réacteur de réformage ou de production d'aromatiques

Le catalyseur comprend généralement un support (par exemple formé d'au moins un oxyde réfractaire, le support peut également inclure une ou plusieurs zéolithes), au moins un métal noble (le platine de préférence), et de préférence au moins un métal promoteur (par exemple l'étain ou le rhénium), au moins un halogène et éventuellement un ou plusieurs éléments additionnels (tels que alcalins, alcalino-terreux, lanthanides, silicium, éléments du groupe IV B, métaux non nobles, éléments du groupe III A, etc.). Les catalyseurs de ce type contiennent, par exemple, du platine et au moins un autre métal déposés sur un support alumine chlorée. D'une manière générale, ces catalyseurs sont utilisés pour la conversion d'hydrocarbures naphténiques ou paraffiniques susceptibles de se transformer par déshydrocyclisation et/ou déshydrogénation, dans le reformage ou pour la production d'hydrocarbures aromatiques (par exemple production de benzène, toluène, ortho-, méta- ou paraxylènes). Ces hydrocarbures proviennent du fractionnement des pétroles bruts par distillation, ou d'autres procédés de transformation tels le craquage catalytique ou le vapocraquage.

Ces catalyseurs sont largement décrits dans la littérature.

Les réactions chimiques entrant en jeu dans le procédé de reformage sont nombreuses. Elles sont bien connues ; on peut citer pour les réactions bénéfiques à la formation d'aromatiques et à l'amélioration de l'indice d'octane, la déshydrogénation des naphtènes, l'isomérisation des cycles cyclopentaniques, l'isomérisation des paraffines, la déshydrocyclisation des paraffines, et pour les réactions néfastes, l'hydrogénolyse et l'hydrocraquage des paraffines et des naphtènes. Ces diverses réactions ont des vitesses très différentes et sont fortement endothermiques pour les réactions de déshydrogénation, exothermiques pour les autres réactions. C'est pourquoi le procédé de reformage se déroule dans plusieurs réacteurs subissant des baisses de températures plus ou moins importantes.

L'expérience montre que les réactions de déshydrogénation des naphtènes se passent dans le ou les premiers réacteurs.

Les procédés de reformage ou de production d'aromatiques s'effectuaient à 40 bars il y a 30 ans ; il y a 20 ans, à 15 bars, et aujourd'hui, il est courant de voir des réacteurs de reformage fonctionnant à des pressions inférieures à 10 bars, notamment comprises entre 3 et 8 bars.

Mais cette baisse de pression d'hydrogène, s'accompagne d'une désactivation plus rapide du catalyseur par cokage. Le coke, composé de poids moléculaire élevé et à base essentiellement de carbone et d'hydrogène, se dépose sur les sites actifs du catalyseur. Le rapport molaire H/C du coke formé varie d'environ 0,3 à 1,0. Les atomes de carbone et d'hydrogène forment des structures poly-aromatiques condensées dont le degré d'organisation cristalline est variable en fonction de la nature du catalyseur et des conditions de fonctionnement des réacteurs. Bien que la sélectivité de transformation des hydrocarbures en coke soit très faible, les teneurs en coke accumulé sur le catalyseur peuvent être importantes. Typiquement, pour les unités à lit fixe, ces teneurs sont comprises entre 2,0 et 20,0 à 25,5 % poids. Pour les unités à lit circulant, ces teneurs s'échelonnent de 3,0 à 10,0 % poids en sortie du dernier réacteur. Le coke se dépose majoritairement dans le ou les deux derniers réacteurs.

Le dépôt de coke, plus rapide à basse pression, impose une régénération également plus rapide du catalyseur. Les cycles de régénération actuels peuvent descendre jusqu'à 2-3 jours.

De très nombreux brevets traitent des procédés de reformage ou de production de composés aromatiques avec régénération continue ou séquentielle du catalyseur.

Les schémas de procédés mettent en oeuvre au moins deux réacteurs, dans lesquels circule de haut en bas un lit mobile de catalyseur, traversé par une charge composée d'hydrocarbures et d'hydrogène, charge réchauffée entre chaque réacteur.

L'expérience montre que le premier réacteur est le siège de réactions rapides fortement productrices d'hydrogène.

Le brevet FR-2,657,087 de la demanderesse décrit un tel procédé de reformage.

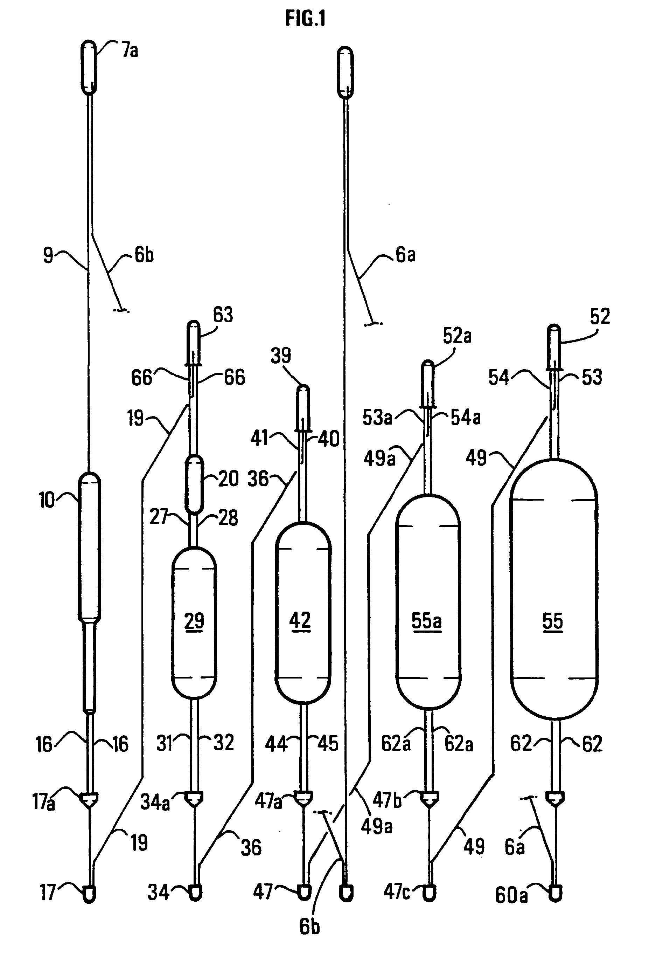

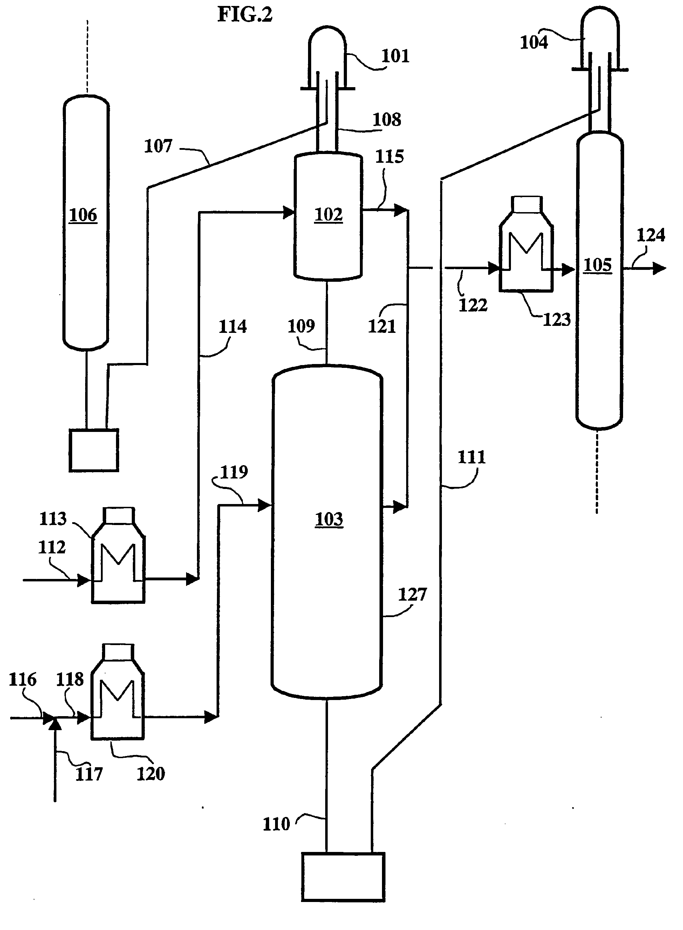

Sur la figure 1 ci-reproduite (correspondant à la figure 2 du brevet FR-2,657,087) on utilise 4 réacteurs. On fait circuler une charge initiale composée d'hydrocarbures et d'hydrogène à travers au moins deux zones de réaction disposées en série, côte à côte, chacune de ces zones de réaction étant de type à lit mobile, la charge circulant successivement dans chaque zone de réaction, et le catalyseur circulant également dans chaque zone de réaction en s'écoulant en continu, sous la forme d'un lit mobile, de haut en bas de chacune d'elle, le catalyseur soutiré en bas de chaque zone de réaction étant transporté dans un courant d'hydrogène au sommet de la zone de réaction suivante, le catalyseur, soutiré en continu du bas de la dernière zone de réaction traversée par la charge, étant ensuite envoyé dans une zone de régénération.

En se reportant à la figure 1, la charge composée d'hydrocarbures et d'hydrogène, selon un rapport H2/HC bien défini, traverse le réacteur 1 (29), est réchauffée, traverse le réacteur 2 (42), est réchauffée, traverse le réacteur 3 (55a), est réchauffée, traverse le réacteur 4 (55), et est envoyée à une section de séparation.

Le catalyseur descend dans le réacteur 1 (29) en étant traversé par la charge, est soutiré de (29) par des conduites (31) et (32), est recollecté dans une trémie (34a), est élevé vers le ballon tampon supérieur (39) du réacteur 2 par l'intermédiaire d'un moyen de levage (34) et (36) ; il s'écoule de ce ballon tampon (39) par des conduites (40) et (41), vers le réacteur 2 (42) ; il est soutiré de (42) par des conduites (44) et (45), est recollecté dans une trémie (47a), est élevé vers le ballon tampon supérieur (52a) du réacteur 3 par l'intermédiaire d'un moyen de levage (47) et (49a) ; il s'écoule de ce ballon tampon (52a) par des conduites (53a) et (54a), vers le réacteur 3 (55a) ; il est soutiré de (55a) par des conduites (62a), est recollecté dans une trémie (47b), est élevé vers le ballon tampon supérieur (52) du réacteur.4 par l'intermédiaire d'un moyen de levage (47c) et (49) ; il s'écoule de ce ballon tampon (52) par des conduites (53) et (54), vers le réacteur 4 (55) ; il est soutiré de (55) par des conduites (62), est recollecté dans une trémie, est élevé vers le ballon tampon supérieur (7a) du régénérateur (10) par l'intermédiaire d'un moyen de levage (60a), (6a) et (6b) ; il s'écoule de ce ballon tampon (7a) par une conduite (9), vers le régénérateur (10) ; il est soutiré de (10) par des conduites (16), est recollecté dans une trémie (17a), est élevé vers le ballon tampon supérieur (63) du réacteur 1 par l'intermédiaire d'un moyen de levage (17) et (19) ; il s'écoule de ce ballon tampon (63) par des conduites (66) vers un ballon de réduction (20), où le catalyseur retrouve au moins partiellement sa forme métallique ; enfin, il s'écoule par les conduites (27) et (28) vers le réacteur 1 (29).

Le traitement de la charge dans le(s) réacteur(s) de reformage ou de production d'aromatiques a lieu généralement sous des pressions de 0,1 à 4 MPa et de préférence 0,3-0,8 MPa, 400-700°C et de préférence 480-600 °C, des vitesses spatiales de 0,1 à 10 $h^{-1}$ et de préférence 1-4 $h^{-1}$ et avec des ratios hydrogène recyclé / hydrocarbures (mol.) de 0,1 à 10 et de préférence 3-10, et plus particulièrement de 3-4 pour le reformage régénératif et 4-6 pour le procédé de production d'aromatiques.

Traditionnellement, une première séparation est effectuée après le dernier réacteur, entre les hydrocarbures et un hydrogène de recyclage qui est réinjecté dans la charge fraîche.

L'effluent non recyclé subit un processus de séparation qui permet d'obtenir un hydrogène dit exporté, qui peut renfermer jusqu'à 10 % volume, ou au mieux 4 %, d'hydrocarbures légers tels que l'éthane et le propane. En comparaison, l'hydrogène de recyclage peut contenir plus de 10 %, généralement plus de 12 % ou de 15 % en volume C2+, de C2H4 à C10 aromatiques.

Les catalyseurs cokés sont régénérés.

Généralement, la régénération du catalyseur s'effectue principalement en trois étapes :

(a) une étape de combustion où le coke est éliminé par brûlage avec un gaz contenant de l'oxygène,

(b) une étape d'halogénation où le catalyseur est balayé par un gaz halogéné, qui permet de réintroduire de l'halogène sur le catalyseur et de redisperser la phase métallique,

(c) une étape de séchage ou de calcination qui élimine du catalyseur l'eau produite par la combustion du coke.

Elle est complétée par une étape de réduction où le catalyseur est réduit préalablement à l'introduction de la charge, qui est réalisée généralement entre le régénérateur (où sont mises en oeuvre les étapes a, b, c) et le premier réacteur où a lieu la réaction.

La réduction consiste en une transformation chimique de la phase métallique contenue dans le catalyseur. A l'issue de la préparation du catalyseur ou de l'étape de calcination subie par le catalyseur en régénération, le ou les métaux sont présents à la surface du catalyseur sous forme d'oxyde, ou d'oxychlorure pratiquement inactifs catalytiquement. Avant injection de la charge d'hydrocarbures à traiter, il est donc indispensable de procéder à la réduction du catalyseur.

En pratique, cette réduction est réalisée à haute température (entre 300-800 °C et plus généralement 450 et 550 °C) en présence d'hydrogène exporté ou purifié, et pendant des durées généralement comprises entre quelques minutes à plusieurs heures. L'hydrogène purifié est issu d'une unité de purification d'hydrogène exporté. Il contient en général moins de 1% vol de C2+.

Ainsi, il était amené pour la réduction un gaz hydrogène purifié ou exporté et qui était ensuite soutiré et perdu, une fois l'opération de réduction terminée, et il était amené pour la réaction un hydrogène de recyclage (non purifié) et dans un rapport H2/HC unique pour l'unité de réformage.

L'objet de l'invention est défini dans les libellés des revendications indépendantes 1 et 10. D'autres aspects optionels sont definis dans les revendications dépendants.

La présente invention concerne plus précisément un procédé de production d'aromatiques à partir de coupe hydrocarbonée à l'aide d'un catalyseur circulant en lit mobile, procédé comprenant au moins les étapes successives suivantes :

- une première étape de traitement de la coupe mettant en oeuvre une réaction de déshydrogénation des naphtènes en présence d'hydrogène dans un rapport $(H2)_1$/HC avec $(H2)_1$ représentant la quantité molaire d'hydrogène pur introduite dans ladite première étape et HC représentant la quantité molaire de charge introduite dans ladite première étape,
- suivie d'au moins une étape ultérieure de traitement en présence d'hydrogène dans un rapport molaire $(H2)_2/(HC)_2$, avec $(H2)_2$ représentant la quantité molaire d'hydrogène pur introduite dans ladite étape ultérieure et $(HC)_2$ représentant la quantité molaire de charge entrant dans ladite étape ultérieure,
- séparation de l'effluent gazeux contenant l'hydrogène, du produit liquide et du catalyseur, avec recyclage dans ladite première étape de traitement d'une partie au moins de l'effluent gazeux contenant l'hydrogène appelé gaz de recyclage,
- régénération et réduction du catalyseur puis réintroduction du catalyseur dans ladite première étape de traitement, la réduction ayant lieu en présence d'hydrogène dans un rapport molaire $(H2)_{Red}$/HC avec $(H2)_{Red}$ représentant la quantité d'hydrogène pur introduite en réduction,

procédé dans lequel la somme des rapports molaires $(H2)_1$/HC $+(H2)_{Red}$/HC est inférieure ou égale au rapport molaire $(H2)_2/(HC)_2$, ou, $(H2)_1$/HC $+(H2)_{Red}$/HC est supérieur à $(H2)_2/(HC)_2$, mais avec $(H2)_1$/(HC) inférieur à $(H2)_2/(HC)_2$.

Dans la présente invention, il est également possible d'utiliser en réduction l'hydrogène de recyclage. Cette disposition permet notamment d'augmenter la quantité d'hydrogène exporté - produit à haute valeur ajouté - disponible, et peut aussi permettre, le cas échéant, de s'affranchir de la purification de l'hydrogène issu du procédé de reformage.

L'étape de réduction est généralement réalisée entre 300-800 °C, de préférence entre 400-600°C, le temps de séjour du catalyseur étant de 15 mn-2 h, et de préférence 30 mn-1h30.

Le procédé de production d'aromatiques (et plus particulièrement la zone dans laquelle est réalisée principalement la réaction de déshydrogénation des naphtènes) est conduit à 400-700°C, 0,1-4 MPa, avec des vitesses spatiales de 0,1-10 $h^{-1}$, et les ratios molaires H2/HC de 0,1 à 10.

Avantageusement, le reformage est réalisé sous 0,3-0,8 MPa, à 480-600 °C, avec des vitesses spatiales de 1-4 $h^{-1}$ et avec des rapports préférés H2/HC d'au plus 4 voire au plus 2 dans l'étape mettant en oeuvre la déshydrogénation.

Une production d'aromatiques BTX est avantageusement réalisée sous 0,3-0,8 MPa, à 480-600 °C, avec des vitesses spatiales de 1-4 $h^{-1}$ et avec des rapports préférés H2/HC d'au plus 6 voire au plus 3 dans l'étape mettant en oeuvre la déshydrogénation.

L'étape de traitement peut être réalisée dans une ou plusieurs zones ; ainsi pour le reformage montré figure 1, quatre zones de traitement sont utilisées.

L'invention porte donc sur l'étape de déshydrogénation des naphtènes réalisée essentiellement dans première zone (ou premier réacteur) de l'étape de traitement. Plusieurs sections (ou zones ou réacteurs) peuvent être utilisés pour réaliser cette étape.

L'invention sera mieux expliquée à partir de la figure 2.

Le catalyseur circule du régénérateur (106) au ballon tampon supérieur (101) du premier réacteur (103), par l'intermédiaire d'un moyen de transfert (107) qui est par exemple un élévateur ou lift (107) ; il descend gravitairement par des conduites (108) vers la zone de réduction (102). Cette zone de réduction peut être axiale ou radiale et peut comporter une ou plusieurs sections. Le catalyseur sortant de la zone de réduction passe par la (les) conduite(s) (109) dans le premier réacteur (103), duquel il est soutiré par des conduites (110) ; il est ensuite envoyé au ballon tampon supérieur (104) du deuxième réacteur (105) par un moyen de transfert (111), avantageusement un élévateur.

Le gaz contenant l'hydrogène utilisé pour l'étape de réduction est amené par la conduite (112). Avantageusement, il est amené à la température de l'étape de réduction, par au moins un moyen de chauffage (113). Le flux résultant (114) réduit le catalyseur dans l'enceinte (102). Il en ressort un flux (115).

A la charge, convoyée par au moins une conduite (116), est ajouté un gaz contenant de l'hydrogène par au moins une conduite (117) et le flux résultant entre par la conduite (119) dans le premier réacteur dans lequel ont lieu principalement les réactions de déshydrogénation des naphtènes.

Soit

$(H2)_1$    la quantité en moles d'hydrogène (exprimée en hydrogène pur) amenée au premier réacteur (103) (étant exclu l'éventuel hydrogène provenant de la réduction) par la conduite (119)

$(H2)_{Red}$    la quantité en moles d'hydrogène (exprimée en hydrogène pur) amenée au réacteur (102) par la conduite (114)

$(H2)_2$    la quantité en moles d'hydrogène (exprimée en hydrogène pur) amenée au réacteur (105) dans lequel se déroule l'étape ultérieure (ne comprenant pas principalement les réactions de déshydrogénation des naphtènes)

(HC)    la quantité en moles de charge entrant dans le premier réacteur

$(HC)_2$    la quantité en moles de charge entrant dans le réacteur de l'étape ultérieure (105).

Sur la figure 2, $(HC)_2$ est égal à HC puisque tout l'effluent du premier réacteur est traité dans le second réacteur. On peut envisager le cas où une partie seulement de l'effluent de la première étape est traitée dans l'étape ultérieure, et le cas où de la charge est ajoutée à l'effluent de la première étape avant le réacteur de l'étape ultérieure.

Selon l'invention, la quantité $(H2)_1$ est telle que

$$1) \frac{(H2)_1}{HC} + \frac{(H2)_{Red}}{HC} \leq \frac{(H2)_2}{(HC)_2}$$

et de préférence l'effluent gazeux issu de la réduction est introduit dans ladite première étape et/ou dans au moins une étape ultérieure suivant la déshydrogénation,

ou

$$2) \frac{(H2)_1}{HC} + \frac{(H2)_{Red}}{HC} > \frac{(H2)_2}{(HC)_2} \text{ mais avec } \frac{(H2)_1}{HC} < \frac{(H2)_2}{(HC)_2} .$$

D'une façon générale, $\dfrac{(H2)_1}{HC}$ est d'au plus 10, et de préférence de 0,1 à 10.

Toutes les quantités sont exprimées en moles. Les quantités (H2) sont exprimées en hydrogène pur mais le gaz hydrogéné utilisé peut être à base d'hydrogène purifié, d'hydrogène exporté ou de préférence d'hydrogène de recyclage.

La quantité d'hydrogène amené à l'étape de réduction (calculée en hydrogène pur) est choisie de telle sorte que la PPH par rapport au catalyseur soit comprise entre 1 et 10 kg d'hydrogène/kg de catalyseur/h, de préférence entre 2 et 6 kg d'hydrogène/kg de catalyseur/h. Le débit de gaz est suffisant pour éliminer les calories apportées par d'éventuelles réactions de craquage des hydrocarbures en C2+ contenus dans le gaz de réduction.

La qualité de l'hydrogène est moins critique que dans l'art antérieur. On peut ainsi avantageusement employer en réduction un gaz pouvant contenir des quantités importantes d'impuretés, par exemple 15% en volume de C2+ (hydrogène de recyclage). Mais l'emploi d'hydrogène purifié ou exporté entre également dans le cadre de l'invention.

On notera que le rapport $(H2)_2$/ $(HC)_2$ exprimé précédemment est le rapport utilisé classiquement dans le procédé de traitement et plus particulièrement celui utilisé selon l'art antérieur dans la première zone. Il est ainsi préférentiellement de 2-4 pour le reformage et de 3-6 pour la production d'aromatiques.

Cela signifie que le rapport $(H2)_1$/HC, dans la zone de l'étape de traitement où a lieu la réaction de déshydrogénation des naphtènes, est inférieur au rapport H2/HC de l'art antérieur lorsque (figure 2) l'hydrogène amené pour la réduction est extrait de l'étape de réduction et ne passe pas dans ladite zone (excepté la faible partie qui passe avec le lit mobile de catalyseur).Il est bien évident que dans ce cas, on ajoute généralement de l'hydrogène à la charge entrant dans ladite étape ultérieure.

Ainsi, en mettant en oeuvre l'invention le rapport $(H2)_1$ /HC au niveau de ladite zone a pu être réduit et en conséquence la réaction de déshydrogénation des naphtènes est favorisée.

Avantageusement, le flux (118) est amené à la température de réaction du premier réacteur (103) par au moins un moyen de chauffage (120). Le flux résultant (119) réagit dans le réacteur (103), et donne un effluent (121).

De préférence, les flux gazeux (115) et (121) sont mélangés dans une conduite (122) et constituent la charge du réacteur suivant (105), qui est avantageusement amenée à la température de réaction par au moins un moyen de chauffage (123). Dans cette disposition préférée, le mélange de l'effluent hydrogène de réduction avec l'effluent du premier réacteur, permet d'obtenir un rapport $(H2)_2$/$(HC)_2$ en entrée de deuxième réacteur qui peut être plus élevé que dans l'art antérieur, favorisant ainsi la transformation des hydrocarbures après déshydrogénation.

Ainsi les effluents gazeux issus de la réduction et de l'étape mettant en oeuvre la déshydrogénation sont introduits dans au moins une étape suivant la déshydrogénation. Sont inclues les dispositions dans lesquelles une partie de l'effluent est introduite dans une étape ultérieure (2ème réacteur par exemple), une autre partie de l'effluent (ou le reste) étant introduite dans une autre étape ultérieure (3ème réacteur par exemple).

Il est même possible d'ajouter du gaz de recyclage (ou tout autre hydrogène) dans ladite étape suivant la déshydrogénation.

De façon plus générale, au moins une partie de l'effluent gazeux issu de la réduction peut être introduit dans l'étape mettant en oeuvre la déshydrogénation et/ou au moins une étape suivante la déshydrogénation.

L'effluent sortant du réacteur (105) par la conduite (124) est ensuite traité conformément au procédé de traitement classique, par exemple il est envoyé vers une troisième zone de traitement, il peut être soutiré etc ... Il en est de même pour le catalyseur.

L'invention consiste donc à réduire l'apport d'hydrogène par la ligne (119) dans la première zone de l'étape de traitement, si on compare par rapport à l'art antérieur, et à augmenter la quantité d'hydrogène dans l'étape de réduction. Dans tous les cas, la quantité d'hydrogène utilisé en réduction est maîtrisée.

Cette quantité d'hydrogène utilisée en réduction peut être modulée selon les besoins de l'exploitant. Elle peut correspondre au maintien du rapport H2/HC global (réduction + 1er réacteur). Elle peut aboutir à un rapport H2/HC global supérieur mais tout en maintenant un déficit d'hydrogène dans le 1er réacteur. Il en résulte au niveau du 2ieme réacteur (après déshydrogénation prépondérante des naphtènes) un maintien du rapport H2/HC (par rapport à l'art antérieur) ou une augmentation de ce rapport favorisant les autres réactions. Une injection supplémentaire d'hydrogène peut également être faite.

Il en résulte des avantages très importants :

(a) un débit important de l'hydrogène par rapport à la quantité de catalyseur en zone de réduction qui limite les effets thermiques néfastes de l'hydrogénolyse et de l'hydrocraquage des hydrocarbures en C2+ présents éventuellement dans l'hydrogène utilisé pour la réduction, de sorte que le procédé de l'invention peut fonctionner avec l'hydrogène de recyclage et en l'absence de purification,

(b) le premier réacteur est le siège essentiellement de réactions de déshydrogénation des naphtènes (pour les unités de reformage ou de production de composés aromatiques) fortement productrices d'hydrogène ; une diminution de la quantité d'hydrogène introduit dans la charge de ce premier réacteur favorise ces réactions de déshydrogénation qui sont plus rapides. Malgré ces conditions plus favorables au cokage, on a pu constater que le cokage n'a pas le temps de se développer de manière sensible par rapport à la situation antérieure.

Pour l'exploitant l'invention se traduit par des gains importants résultant de :

(a) la possibilité d'utiliser un hydrogène moins pur en réduction et de limiter le temps de résidence en zone de réduction,

(b) la limitation de la déchloration et du frittage métallique en zone de réduction, et ainsi d'augmenter la durée de vie du catalyseur,

(c) l'optimisation du rapport H2/HC dans le premier réacteur ce qui permet de réduire la quantité de catalyseur nécessaire dans ce premier réacteur pour la déshydrogénation des naphtènes.

Une installation préférée utilisable pour la mise en oeuvre du procédé selon l'invention est une installation pour la production d'aromatiques à partir de coupe hydrocarbonée à l'aide d'un catalyseur circulant en lit mobile, comprenant :

- au moins une zone, dite première zone, pour le traitement de la coupe mettant en oeuvre une réaction de déshydrogénation des naphtènes, ladite zone étant munie d'au moins une conduite pour l'introduction de la coupe et, au moins une conduite pour l'introduction d'un gaz contenant de l'hydrogène, et comportant également au moins une conduite pour l'extraction d'un flux gazeux ;
- au moins une zone ultérieure de traitement située après ladite première zone et comportant au moins une conduite amenant la charge à ladite zone ultérieure, et au moins une conduite pour la sortie d'un effluent gazeux ;
- au moins une zone pour la séparation du catalyseur, du produit liquide et de l'effluent gazeux contenant de l'hydrogène, située après lesdites zones de traitement ;
- au moins une zone pour la régénération du catalyseur ;
- au moins une zone pour la réduction du catalyseur régénéré relié à ladite zone mettant en oeuvre la déshydrogénation des naphtènes de sorte que le catalyseur réduit entre dans ladite zone de déshydrogénation, ladite zone de réduction étant munie
- d'au moins une conduite pour l'introduction de gaz contenant l'hydrogène ;
- et d'au moins une conduite pour l'extraction d'un flux gazeux ;
- au moins une conduite pour le recyclage d'au moins une partie de l'effluent gazeux contenant l'hydrogène à partir de ladite zone de séparation vers ladite zone mettant en oeuvre la réaction de déshydrogénation ;
  installation dans laquelle la conduite pour l'extraction du flux gazeux issu de la réduction est reliée à au moins une conduite amenant la charge de la zone ultérieure.

De préférence, l'installation comporte également au moins une conduite pour le recyclage d'au moins une partie de l'effluent gazeux contenant l'hydrogène obtenu dans la zone de séparation vers ladite zone de réduction.

Dans le cas de la production d'aromatiques visée ici, la conduite pour soutirer la coupe traitée d'une quelconque des zones de traitement est la même que la conduite pour soutirer les effluents gazeux, la réaction ayant lieu en phase gazeuse.

Le lit de catalyseur circulant en lit mobile, chaque zone est évidemment munie d'un moyen pour amener le catalyseur et d'un moyen pour le soutirer.

Avantageusement la conduite pour l'introduction d'un gaz contenant de l'hydrogène est également reliée à une conduite amenant de l'effluent gazeux recyclé.

De façon particulièrement avantageuse, l'invention propose un dispositif utilisable pour mettre en oeuvre le procédé selon l'invention. Ce dispositif est une enceinte (réacteur) comprenant une zone de réduction suivie d'une zone mettant en oeuvre une déshydrogénation, dans le sens de l'écoulement du catalyseur.

Plus précisément, l'invention concerne un réacteur pour le traitement de coupe hydrocarbonée à l'aide d'un catalyseur circulant en lit mobile, comportant au moins une conduite pour l'introduction du catalyseur en haut du réacteur et d'au moins une conduite pour la sortie du catalyseur et située en bas du réacteur, et comportant au moins une zone (103) pour le traitement de la coupe mettant en oeuvre une réaction de déshydrogénation, ladite zone étant munie d'au moins une conduite (119) pour l'introduction de la coupe, d'au moins une conduite (121) pour soutirer ladite coupe traitée et l'effluent gazeux, ladite zone comportant en outre au moins une conduite (117, 119) pour l'introduction d'un gaz contenant de l'hydrogène, réacteur dans lequel ladite zone de traitement est située dans la partie inférieure du réacteur, la partie supérieure comprenant au moins une zone de réduction (102) du catalyseur munie d'au moins une conduite (114) pour l'introduction de gaz contenant l'hydrogène.

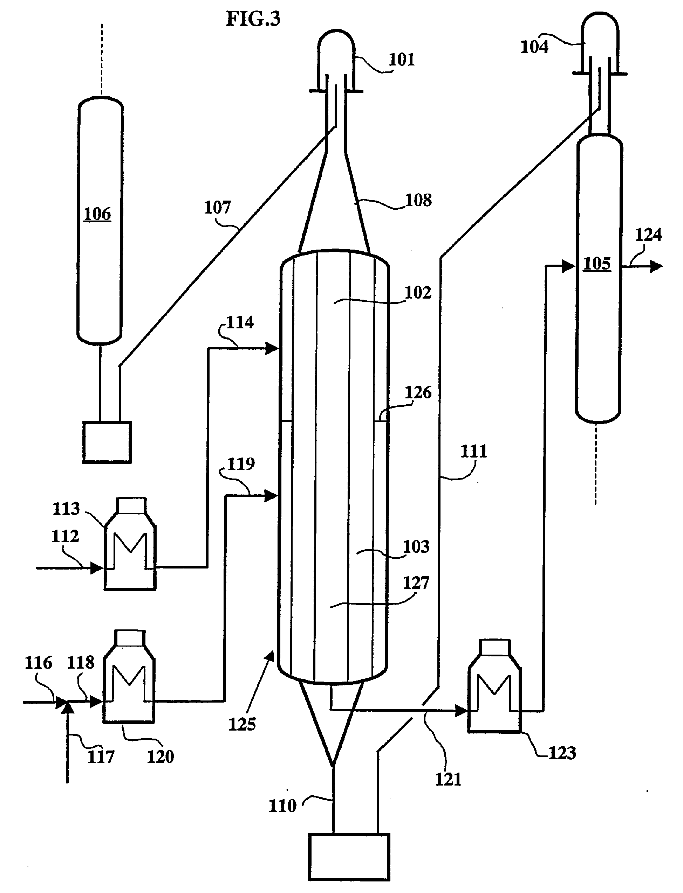

La figure 3 montre un tel réacteur. Sur la figure, on a représenté une technologie à lits radiaux.

Compte tenu de l'importance du débit d'hydrogène et de la perte de charge qui en résulte en lit axial, un lit radial pourra être préféré, mais les dispositions à lits axiaux entrent également dans le cadre de l'invention.

Le catalyseur circule du régénérateur (106) au ballon tampon supérieur (101) du premier réacteur (125), par l'intermédiaire d'un moyen de transfert (107) qui est par exemple un élévateur ou lift (107) ; il descend gravitairement par des conduites (108) vers la zone de réduction (102). Cette zone de réduction peut être axiale ou radiale et peut comporter une ou plusieurs sections. Le catalyseur sortant de la zone de réduction passe dans la zone mettant en oeuvre la déshydrogénation (103) située dans le réacteur (125), duquel il est soutiré par des conduites (110) ; il est ensuite envoyé au ballon tampon supérieur (104) du deuxième réacteur (105) par un moyen de transfert (111), avantageusement un élévateur.

Le gaz contenant l'hydrogène utilisé pour l'étape de réduction est amené par la conduite (112). Avantageusement, il est amené à la température de l'étape de réduction, par au moins un moyen de chauffage (113). Le flux résultant (114) réduit le catalyseur dans la zone (102). Après avoir traversé radialement le lit catalytique de l'extérieur vers l'intérieur du réacteur, l'effluent gazeux se retrouve dans le collecteur central (127).

A la charge, convoyée par au moins une conduite (116), est rajouté un gaz contenant de l'hydrogène par au moins une conduite (117) et le flux résultant entre par la conduite (119) dans le premier réacteur dans lequel ont lieu principalement les réactions de déshydrogénation des naphtènes.

Avantageusement, le flux (118) est amené à la température de réaction de la zone (103) par au moins un moyen de chauffage (120). Le flux résultant (119) traversant le lit de l'extérieur vers l'intérieur du réacteur, réagit dans la zone (103).

L'effluent gazeux résultant se retrouve dans le collecteur central (127).

Les effluents gazeux issus de la zone de réduction (102) et de la zone de traitement mettant en oeuvre une déshydrogénation (103) sont soutirés en mélange par la condutie (121), et constituent la charge du réacteur suivant (105), qui est avantageusement amenée à la température de réaction par au moins un moyen de chauffage (123).

Le mélange des gaz entrant dans chaque zone est avantageusement évité pour la mise en place d'un moyen de séparation (126) (par ex. une plaque) desdites zones.

Dans la disposition figure 3, les effluents gazeux sont mélangés dans le collecteur central (127). Selon une variante, leur mélange en réacteur est évité par la mise en place d'un moyen de séparation desdites zones situé dans le collecteur. Les effluents gazeux sont alors soutirés séparément au niveau de chaque zone, le réacteur comportant alors au moins une conduite pour l'extraction de l'effluent gazeux issu de la réduction.

On a décrit ici une circulation radiale du gaz à travers le lit catalytique de l'extérieur vers l'intérieur du réacteur, la circulation en sens inverse entre également dans le cadre de l'invention.

Les applications préférées sont le reformage et la production de BTX.

L'installation comportant ledit réacteur fait également partie de l'invention.

Dans l'installation d'accord avec l'invention les effluents gazeux issus de la réduction et de ladite première étape sont soutirés séparément puis envoyés en totalité dans ladite étape ultérieure (fig. 2).

On notera que pour toutes ces dispositions, le rapport $(H2_1)/HC$ dans la première étape est toujours inférieur à celui de ladite étape ultérieure.

On notera également que, généralement, au moins une partie de l'effluent gazeux issu de la réduction est introduite dans au moins une étape de traitement du procédé (première étape, étape ultérieure).

Dans toutes les dispositions avantageuses citées, on peut toujours additionner de l'hydrogène extérieur au procédé.

L'exemple suivant illustre l'invention sans en limiter la portée.

Le catalyseur circule à 800 kg/h et 90 839 kg/h de charge sont traités. La réduction est effectuée avec 18 294 kg/h d'un gaz riche en hydrogène de pureté 83.7 % en volume d'hydrogène, de masse molaire 9.6 kg/kmole, avec une PPH en H2 de 4 h$^{-1}$, et un temps de séjour du catalyseur de 1 heure. Le rapport $(H2)_{Red}/HC$ est de 2,07. Dans la première zone de traitement (premier réacteur), on injecte 9 976 kg/h de gaz riche en hydrogène de pureté 83.7 % en volume d'hydrogène, de masse molaire 9.6 kg/kmole, dans la charge à 90839 kg/h. On obtient alors un rapport $(H2)_1/HC$ égal à 1.13.

Dans l'art antérieur, pour le même débit de charge et de catalyseur, on injectait dans le premier réacteur un gaz d'hydrogène de recyclage de masse molaire 9,6 kg/kmole, contenant 83,7 % en volume d'hydrogène, au débit de 28270 kg/h. Tout l'effluent passait dans le deuxième réacteur. Le rapport molaire $(H2)_2/HC$ résultant était égal à 3,2. La réduction était effectuée avec un gaz riche à 92,1 % en volume d'hydrogène, de masse molaire 4,4 kg/kmole, sous un débit de 600 kg/h, et pour un temps de séjour du catalyseur de 2 heures.

On peut constater qu'avec l'utilisation du procédé selon la présente invention, on peut utiliser de l'hydrogène non purifié c'est-à-dire contenant plus de 10 % en volume d'impuretés, et généralement plus de 15 % en volume, tant au niveau du présent réacteur de reformage qu'au niveau du réacteur réducteur ; et le débit de gaz riche en hydrogène injecté dans la charge du premier réacteur est diminué de la quantité ajoutée en réduction.

Ces conditions sont modulables.

En effet, dans le cas où on souhaite un rapport $(H2)_1/HC$ inférieur à 1,1, il faudra injecter le gaz riche en hydrogène restant (qui n'a pas alors été injecté dans la charge qui entre du premier réacteur) dans l'effluent du premier réacteur avant son entrée dans le second réacteur.

Si un rapport $(H2)_1/HC$ plus élevé dans le premier réacteur est souhaité, il est possible de réduire le débit d'hydrogène H2 en réduction. Ainsi avec une PPH H2 en zone de réduction égale à 2 h$^{-1}$ par exemple, on peut alors opérer dans les conditions de l'exemple un rapport $(H2)_1/HC$ égal à 1.4 dans le premier réacteur.

Il est possible d'avoir un temps de séjour et une PPH H2 en réduction, et un rapport $(H2)_1/HC$ dans le premier réacteur tels que le cas de l'exemple n'est pas applicable. Il se peut que les quantités d'hydrogène de réduction et d'hydrogène injecté dans la charge ne soient pas suffisantes pour avoir un rapport $(H2)_1/HC$ convenable en entrée de second réacteur. Dans ce cas, il est possible d'installer une injection supplémentaire de gaz riche en hydrogène dans les effluents sortant du premier réacteur, ou du moins dans la charge du second réacteur.

## Revendications

1. Procédé de production d'aromatiques à partir de coupe hydrocarbonée à l'aide d'un catalyseur circulant en lit mobile, procédé comprenant au moins les étapes successives suivantes :

   - une première étape de traitement de la coupe mettant en oeuvre une réaction de déshydrogénation des naphtènes en présence d'hydrogène dans un rapport $(H2)_1/HC$ avec $(H2)_1$ représentant la quantité molaire d'hydrogène pur introduite dans ladite première étape et HC représentant la quantité molaire de charge introduite dans ladite première étape,
   - suivie d'au moins une étape ultérieure de traitement, suivant la déshydrogénation, en présence d'hydrogène dans un rapport molaire $(H2)_2/(HC)_2$, avec $(H2)_2$ représentant la quantité molaire d'hydrogène pur introduite dans ladite étape ultérieure et $(HC)_2$ représentant la quantité molaire de charge entrant dans ladite étape ultérieure,
   - séparation de l'effluent gazeux contenant l'hydrogène, du produit liquide et du catalyseur, avec recyclage dans ladite première étape de traitement d'une partie au moins de l'effluent gazeux contenant l'hydrogène appelé gaz de recyclage,
   - régénération et réduction du catalyseur puis réintroduction du catalyseur dans ladite première étape de traitement, la réduction ayant lieu en présence d'hydrogène dans un rapport molaire $(H2)_{Red}/HC$ avec $(H2)_{Red}$ représentant la quantité d'hydrogène pur introduite en réduction,
   procédé **caractérisé en ce que** la somme des rapports molaires $(H2)_1/HC + (H2)_{Red}/HC$ est inférieure ou égale au rapport molaire $(H2)_2/HC_2$, ou, la somme desdits rapports molaires est supérieure au rapport molaire $(H2)_2/(HC_2)$ mais avec $(H2)_1/HC$ inférieur à $(H2)_2/(HC)_2$, et **en ce que** les effluents gazeux issus de la réduction et de l'étape mettant en oeuvre la déshydrogénation sont introduits dans au moins une étape ultérieure suivant la déshydrogénation

**2.** Procédé selon l'une des revendications précédentes dans laquelle il est utilisé pour la réduction du catalyseur du gaz de recyclage, ou un gaz hydrogène exporté.

**3.** Procédé selon l'une des revendications précédentes, **caractérisé en ce que** les étapes de traitement sont réalisées à 400-700 °C, 0,1-4 MPa, avec des vitesses spatiales de 0,1-10 h$^{-1}$ et des ratios molaires $(H2)_1$/HC de 0,1 à 10 dans l'étape mettant en oeuvre la déshydrogénation.

**4.** Procédé selon l'une des revendications précédentes, **caractérisé en ce qu'**il s'agit d'un reformage réalisé sous 0,3-0,8 MPa, à 480-600 °C, avec des vitesses spatiales de 1-4 h$^{-1}$ et avec des rapports $(H2)_1$/HC d'au plus 4 dans l'étape mettant en oeuvre la déshydrogénation.

**5.** Procédé selon la revendication 4, dans lequel le rapport $(H2)_1$/HC est d'au plus 2.

**6.** Procédé selon l'une des revendications 1 à 3, **caractérisé en ce qu'**il s'agit d'une production d'aromatiques opérant sous 0,3-0,8 MPa, à 480-600 °C, avec des vitesses spatiales de 1-4 h$^{-1}$ et des rapports $(H2)_1$/HC d'au plus 6 dans l'étape mettant en oeuvre la déshydrogénation.

**7.** Procédé selon la revendication 6, dans lequel le rapport $(H2)_1$/HC est d'au plus 3.

**8.** Procédé selon l'une des revendications précédentes, **caractérisé en ce qu'**il est ajouté du gaz de recyclage dans ladite étape suivant la déshydrogénation.

**9.** Procédé selon l'une des revendications précédentes dans lequel la quantité d'hydrogène amenée à l'étape de réduction est de 1-10 kg/kg de catalyseur/h.

**10.** Installation pour la production d'aromatiques à partir de coupe hydrocarbonée à l'aide d'un catalyseur circulant en lit mobile, comprenant :

- au moins une zone, dite première zone, pour le traitement de la coupe mettant en oeuvre une réaction de déshydrogénation des naphtènes, ladite zone étant munie d'au moins une conduite pour l'introduction de la coupe et, au moins une conduite pour l'introduction d'un gaz contenant de l'hydrogène en quantité $(H_2)_1$/HC, et comportant également au moins une conduite pour l'extraction d'un flux gazeux ;
- au moins une zone ultérieure de traitement, dans laquelle est amenée une quantité d'hydrogène $(H_2)_2$/$(HC)_2$, située après ladite première zone et comportant au moins une conduite amenant la charge à ladite zone ultérieure, et au moins une conduite pour la sortie d'un effluent gazeux ;
- au moins une zone pour la séparation du catalyseur, du produit liquide et de l'effluent gazeux contenant de l'hydrogène, située après lesdites zones de traitement ;
- au moins une zone pour la régénération du catalyseur ;
- au moins une zone pour la réduction du catalyseur régénéré relié à ladite zone mettant en oeuvre la déshydrogénation des naphtènes de sorte que le catalyseur réduit entre dans ladite zone de déshydrogénation, ladite zone de réduction étant munie
- d'au moins une conduite pour l'introduction de gaz contenant l'hydrogène en quantité $(H_2)_{Red}$/HC de telle sorte que la somme des rapports molaires $(H_2)_1$/HC + $(H_2)_{Red}$/HC est inférieure ou égale au rapport molaire $(H_2)_2$/$HC_2$, ou, la somme desdits rapports molaires est supérieure au rapport molaire $(H_2)_2$/$(HC_2)$ mais avec $(H_2)_1$/HC inférieur à $(H_2)_2$/$(HC)_2$,
- et d'au moins une conduite pour l'extraction d'un flux gazeux ;
- au moins une conduite pour le recyclage d'au moins une partie de l'effluent gazeux contenant de l'hydrogène à partir de ladite zone de séparation vers ladite zone mettant en oeuvre la réaction de déshydrogénation ;
installation dans laquelle la conduite pour l'extraction du flux gazeux issu de la réduction est reliée à au moins une conduite amenant la charge de la zone ultérieure.

**11.** Installation selon la revendication 10 comportant également au moins une conduite pour le recyclage d'au moins une partie de l'effluent gazeux contenant l'hydrogène obtenu dans la zone de séparation vers ladite zone de réduction.

**Claims**

**1.** A process for producing aromatic compounds from a hydrocarbon cut using a catalyst circulating in a moving bed, the process comprising at least the following successive steps:

• a first step for treating the cut employing a naphthene dehydrogenation reaction carried out in the presence of hydrogen in a ratio $(H_2)_1$/HC where $(H_2)_1$ represents the molar quantity of pure hydrogen introduced into said first step and HC represents the molar quantity of feed introduced into said first step;
• followed by at least one subsequent treatment step, following the dehydrogenation, carried out in the presence of hydrogen in a mole ratio $(H_2)_2/(HC)_2$, where $(H_2)_2$ represents the molar quantity of pure hydrogen introduced into said subsequent step and $(HC)_2$ represents the molar quantity of feed entering said subsequent step;
• separating the gaseous hydrogen-containing effluent from the liquid product and the catalyst, recycling at least a portion of the gaseous hydrogen-containing effluent, termed the recycle gas, to said first treatment step;
• regenerating and reducing the catalyst then re-introducing the catalyst into said first treatment step, reduction taking place in the presence of hydrogen in a mole ratio $(H_2)_{red}$/HC where $(H_2)_{red}$ represents the quantity of pure hydrogen introduced into the reduction step;
**characterized in that** the sum of the mole ratios $(H_2)_1$/HC + $(H_2)_{red}$/HC is less than or equal to the mole ratio $(H_2)_2/(HC)_2$, or the sum of said mole ratios is greater than the mole ratio $(H_2)_2/(HC)_2$ but where $(H_2)_1$/HC is lower than $(H_2)_2/(HC)_2$ and **in that** the gaseous effluent from the reduction step and from the step where dehydrogenation reaction occurs are introduced into at least one subsequent step following dehydrogenation.

2. A process according to any one of the preceding claims, in which recycle gas or an exported hydrogen gas is used to reduce the catalyst.

3. A process according to any one of the preceding claims, **characterized in that** the treatment steps are carried out at 400-700°C, at 0.1-4 MPa, with space velocities of 0.1-10 h$^{-1}$ and with $(H_2)_1$/HC mole ratios of 0.1 to 10 in the step implementing dehydrogenation.

4. A process according to any one of the preceding claims, **characterized in that** it concerns reforming carried out at 0.3-0.8 MPa, at 480-600°C, with space velocities of 1-4 h$^{-1}$ and with $(H_2)_1$/HC ratios of at most 4 in the step implementing dehydrogenation.

5. A process according to claim 7, in which the $(H_2)_1$/HC ratio is at most 2.

6. A process according to any one of claims 1 to 6, **characterized in that** it concerns aromatic compound production carried out at 0.3-0.8 MPa, at 480-600°C, with space velocities of 1-4 h$^{-1}$ and $(H_2)_1$/HC ratios of at most 6 in the step implementing dehydrogenation.

7. A process according to claim 9, in which the $(H_2)_1$/HC ratio is at most 3.

8. A process according to any one of the preceding claims, **characterized in that** recycle gas is added to said step following dehydrogenation.

9. A process according to any one of the preceding claims, in which the quantity of hydrogen supplied to the reduction step is 1-10 kg/kg of catalyst/h.

10. An apparatus for producing aromatic compounds from a hydrocarbon cut using a catalyst circulating in a moving bed, comprising:

• at least one zone, the first zone, for treating the cut involving a naphthene dehydrogenation reaction, said zone being provided with at least one line for introducing the cut and at least one line for introducing a hydrogen-containing gas in quantity such as $(H_2)_1$/HC, and also comprising at least one gaseous stream withdrawal line;
• at least one subsequent treatment zone in which a quantity of hydrogen $(H_2)_1/(HC)_2$ is supplied, located after said first zone and comprising at least one line for supplying feed to said subsequent zone, and at least one line for withdrawing a gaseous effluent;
• at least one zone for separating catalyst, liquid product and gaseous hydrogen-containing effluent located after said treatment zones;
• at least one catalyst regenerating zone;
• at least one zone for reducing regenerated catalyst connected to said zone carrying out naphthene dehydrogenation such that the reduced catalyst enters said dehydrogenation zone, said reduction zone being provided with:

• at least one line for introducing hydrogen-containing gas in quantity $(H_2)_{red}/HC$ such as the sum of mole ratio $(H_2)_1/HC + (H_2)_{red}/HC$ is less than or equal to the mole ratio $(H_2)_2/(HC)_2$, or the sum of said mole ratios is greater than the mole ratio $(H_2)_2/(HC)_2$ but where $(H_2)_1/HC$ is lower than $(H_2)_2/(HC)_2$,
• and at least one line for extracting a gas stream;
• at least one line for recycling at least a portion of the gaseous hydrogen-containing effluent from said separation zone to said zone carrying out the dehydrogenation reaction;
in which apparatus the line for withdrawing a gaseous stream from the reduction step is connected to at least one line supplying feed to the subsequent zone.

11. An apparatus according to claim 10, also comprising at least one line for recycling at least a portion of the gaseous hydrogen-containing effluent obtained from the separation zone to said reduction zone.

**Patentansprüche**

1. Verfahren zur Herstellung aromatischer Verbindungen aus einer kohlenwasserstoffhaltigen Fraktion mit Hilfe eines Katalysators, der als Wirbelschicht zirkuliert, wobei das Verfahren mindestens die folgenden nacheinander durchzuführenden Schritte umfasst:

   - einen ersten Schritt der Behandlung der Fraktion, in welchem eine Reaktion zur Dehydrierung der Cycloalkane in Gegenwart von Wasserstoff in einem Verhältnis $(H2)_1/HC$ durchgeführt wird, wobei $(H2)_1$ die molare Menge an reinem Wasserstoff darstellt, die im ersten Schritt eingeleitet wird und HC die molare Menge an Beschickungsgut darstellt, die im ersten Schritt eingeleitet wird,
   - gefolgt von einem Nachbehandlungsschritt, der nach der Dehydrierung in Gegenwart von Wasserstoff in einem Molverhältnis $(H2)_2/(HC)_2$ durchgeführt wird, wobei $(H2)_2$ die molare Menge an reinem Wasserstoff darstellt, die in diesem Folgeschritt eingeleitet wird und $(HC)_2$ die molare Menge an Beschickungsgut darstellt, die in diesem Folgeschritt eingeleitet wird,
   - Trennung des gasförmigen Stoffstroms, der den Wasserstoff enthält, des flüssigen Produktes und des Katalysator, wobei mindestens ein Teil des gasförmigen Stoffstroms, der den Wasserstoff enthält und als Rückführungsgas bezeichnet wird, zum ersten Behandlungsschritt zurückgeführt wird,
   - Regeneration und Reduktion des Katalysator, woraufhin der Katalysator zum ersten Behandlungsschritt zurückgeführt wird, wobei die Reduktion in Gegenwart von Wasserstoff in einem Molverhältnis $(H2)_{Red}/HC$ erfolgt, wobei $(H2)_{Red}$ die Menge an Wasser darstellt, die zur Reduktion eingesetzt wird,
   wobei das Verfahren **dadurch gekennzeichnet ist, dass** die Summe der Molverhältnisse $(H2)_1/HC + (H2)_{Red}/HC$ kleiner oder gleich dem Molverhältnis $(H2)_2/HC_2$ ist oder die Summe dieser Molverhältnisse größer als das Molverhältnis $(H2)_2/(HC_2)$ ist, wobei jedoch $(H2)_1/HC$ kleiner als $(H2)_2/(HC)_2$ ist, und dass die gasförmigen Stoffströme, die aus der Reduktion und dem Schritt, in welchem die Dehydrierung durchgeführt wird, stammen, mindestens einem Folgeschritt, der nach der Dehydrierung durchgeführt wird, zugeführt werden.

2. Verfahren nach einem der vorhergehenden Ansprüche, wobei es für die Reduktion des Katalysators des Rückführungsgases, oder ein anderes nach außen geleitetes Wasserstoffgas verwendet wird.

3. Verfahren nach einem der vorhergehenden Ansprüche, **dadurch gekennzeichnet, dass** die Behandlungsschritte bei 400 bis 700 °C, 0,1 bis 4 MPa durchgeführt werden, wobei im Schritt, in welchem die Dehydrierung durchgeführt wird, die raumbezogenen Geschwindigkeiten 0,1 bis 10 $h^{-1}$ und die $(H2)_1/HC$-Molverhältnisse 0,1 bis 10 betragen.

4. Verfahren gemäß einem der vorhergehenden Ansprüche, **dadurch gekennzeichnet, dass** es sich eine Reformierung handelt, die bei 0,3 bis 0,8 MPa, bei 480 bis 600 °C durchgeführt wird, wobei im Schritt, in welchem die Dehydrierung durchgeführt wird, die raumbezogenen Geschwindigkeiten 1 bis 4 $h^{-1}$ und die $(H2)_1/HC$-Verhältnisse höchstens 4 betragen.

5. Verfahren nach Anspruch 4, wobei das $(H2)_1/HC$-Verhältnis höchstens 2 beträgt.

6. Verfahren nach einem der Ansprüche 1 bis 3, **dadurch gekennzeichnet, dass** es sich um eine Herstellung aromatischer Verbindungen handelt, die bei 0,3 bis 0,8 MPa, bei 480 bis 600 °C betrieben wird, wobei im Schritt, in welchem die Dehydrierung durchgeführt wird, die raumbezogenen Geschwindigkeiten 1 bis 4 $h^{-1}$ und die $(H2)_1/HC$-Verhältnisse höchstens 6 betragen.

**7.** Verfahren nach Anspruch 6, wobei das $(H2)_1$/HC-Verhältnis höchstens 3 beträgt.

**8.** Verfahren nach einem der vorhergehenden Ansprüche, **dadurch gekennzeichnet, dass** im Schritt, der auf die Dehydrierung folgt, Rückführungsgas zugesetzt wird.

**9.** Verfahren nach einem der vorhergehenden Ansprüche, wobei die Menge an Wasserstoff, die dem Reduktionsschritt zugeführt wird, 1 bis 10 kg/kg an Katalysator/h beträgt.

**10.** Anlage zur Herstellung aromatischer Verbindungen aus einer kohlenwasserstoffhaltigen Fraktion mit Hilfe eines Katalysators der in einer Wirbelschicht zirkuliert, umfassend

- mindestens einen Bereich, der als erster Bereich bezeichnet wird, für die Behandlung der Fraktion unter Durchführung einer Reaktion der Dehydrierung der Cycloalkane, wobei der Bereich mit mindestens einer Leitung zur Einspeisung der Fraktion und mit mindestens einer Leitung zur Einspeisung eines Gases, das Wasserstoff in einer Menge von $(H_2)_1$/HC enthält, versehen ist und weiterhin mindestens eine Leitung zur Abführung eines gasförmigen Stromstroms aufweist;
- mindestens einen Nachbehandlungsbereich, welchem eine Menge an Wasserstoff $(H_2)_2$/$(HC)_2$ zugeführt wird, wobei er dem ersten Bereich nachgeschaltet ist und mindestens eine Leitung, die diesem Folgebereich das Beschickungsgut zuführt, und mindestens eine Leitung für den Austritt eines gasförmigen Stoffstroms aufweist;
- mindestens einen Bereich für die Trennung des Katalysators, des flüssigen Produktes und des gasförmigen Stoffstroms, der Wasserstoff enthält, wobei er den Behandlungsbereichen nachgeschaltet ist;
- mindestens einen Bereich für die Regeneration des Katalysators;
- mindestens einen Bereich für die Reduktion des regenerierten Katalysators, wobei dieser derart mit dem Bereich verbunden ist, in welchem die Dehydrierung der Cycloalkane durchgeführt wird, dass der reduzierte Katalysator in den Dehydrierungsbereich gelangt, wobei der Reduktionsbereich mit Folgendem versehen ist

- mindestens einer Leitung für die Zuführung von Gas, das den Wasserstoff in einer derartigen Menge $(H_2)_{Red}$/HC enthält, dass die Summe der Molverhältnisse $(H_2)_1$/HC + $(H_2)_{Red}$/HC kleiner oder gleich dem Molverhältnis $(H_2)_2$/$HC_2$ ist oder die Summe dieser Molverhältnisse größer als das Molverhältnis $(H_2)_2$/$(HC_2)$ ist, wobei jedoch $(H_2)_1$/HC kleiner als $(H_2)_2$/$(HC)_2$ ist,

- und mindestens einer Leitung zur Abführung eines gasförmigen Stoffstroms;
- mindestens eine Leitung für die Rückführung mindestens eines Teils des gasförmigen Stoffstroms, der Wasserstoff enthält, wobei diese vom Trennungsbereich ausgeht und zum Bereich führt, in welchem die Dehydrierungsreaktion durchgeführt wird;
wobei in der Anlage die Leitung zur Abführung des gasförmigen Stoffstroms, der aus der Reduktion stammt, mit mindestens einer Leitung verbunden ist, die das Beschickungsgut dem Folgebereich zuführt.

**11.** Anlage nach Anspruch 10, die weiterhin mindestens eine Leitung aufweist, die dazu dient, mindestens einen Teil des gasförmigen Stoffstroms, der den Wasserstoff enthält und im Trennungsbereich erhalten wird, zum Reduktionsbereich zurückzuführen.

**FIG.1**

**FIG.2**

**FIG.3**

**EP 1 242 568 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2657087